# EUROPÄISCHE PATENTSCHRIFT

(11) **EP 2 663 617 B1**
(45) Veröffentlichungstag und Bekanntmachung des Hinweises auf die Patenterteilung: **25.10.2017**
(21) Anmeldenummer: 12701436.3
(22) Anmeldetag: 09.01.2012
(51) Int. Cl.: C10J 3/50, C10L 5/36, C10L 5/44, C10L 9/08, C10J 3/76, C10J 3/48

(54) **VERFAHREN ZUR ERZEUGUNG VON BRENN- UND SYNTHESEROHGAS**
METHOD FOR PRODUCING FUEL GAS AND RAW SYNTHESIS GAS
PROCÉDÉ DE PRODUCTION DE GAZ BRUT DE COMBUSTION ET DE SYNTHÈSE

(30) Priorität: 10.01.2011 DE 102011008187
(43) Veröffentlichungstag der Anmeldung: 20.11.2013
(73) Patentinhaber: Wolf, Bodo M., 87719 Mindelheim (DE); SunCoal Industries GmbH, 14974 Ludwigsfelde (DE)
(72) Erfinder: WOLF, Bodo M., 87719 Mindelheim (DE)
(74) Vertreter: Maikowski & Ninnemann Patentanwälte Partnerschaft mbB
(86) Internationale Anmeldenummer: PCT/EP2012/000056
(87) Internationale Veröffentlichungsnummer: WO 2012/095288

(56) Entgegenhaltungen:
- WO-A1-2006/123018
- WO-A1-2008/100012
- WO-A1-2008/125556
- WO-A2-2007/145507
- DE-A1- 4 025 808
- DE-A1-102007 034 950
- DE-A1-102009 027 007
- US-A- 5 261 602
- US-A1- 2008 110 090
- US-A1- 2008 175 769

## Beschreibung

Die Erfindung betrifft ein Verfahren zur Erzeugung von Brenn- und Syntheserohgas aus Brennstaub, der aus Kohle und Brennstoffen, die über hydrothermale Karbonisierung aus Biomassen, wie Holz, Stroh, Laub, Grünschnitt u.a. oder organischen Abfällen hergestellt wurden.

Ein gattungsgemäßes Verfahren ist hierbei aus der US 2008/0110090 A1 bekannt.

Des Weiteren offenbart die WO 2008/100012 A1 ein Verfahren zur Wiedergewinnung von Ressourcen aus Abfall, welches in einem ersten Schritt eine Dekomposition des Abfalls in Asche und reformiertes Gas durch eine partielle Oxidation, eine thermische Dekomposition und einen Reformierungsprozess, unter Nutzung von ausschließlich Sauerstoff, vorsieht. Hierbei hat das dekomposierte Gas, welches aus einem Dekomposer austritt, nach der Lehre der WO 2008/100012 A1 große Anteile verrußten Kohlenstoffs und schweren Kohlenwasserstoffes.

Aus der WO 2006/123018 A1 ist ferner eine Verfahren zur Vergasung kohlenstoffhaltigen Materials bekannt, bei dem einer für die Vergasung vorgesehenen Vergasungsbrennkammer eine separate Wirbelstrombrennkammer vorgeschaltet ist. Abgas aus dieser Wirbelstromkammer wird der Vergasungsbrennkammer oberhalb eines Bodenabschnitts zugeführt, so dass das Abgas aus der Wirbelstromkammer als sekundäres Vergasungsgas genutzt wird.

Das Anwendungsgebiet der Erfindung ist vorzugsweise die dezentrale Strom- und Wärmeversorgung auf Basis von Kohle, auch solcher, die über hydrothermale Karbonisierung aus Biomasse und organischen Abfällen gewonnen wurde.

Die Umwandlung der chemisch gebundenen Energie der Kohle in Verbrennungsgas oder Brenn- und Syntheserohgas, als Sekundärenergieträger, erfolgt beim Stand der Technik durch Oxidation der Kohle mit Luft, Sauerstoff, Wasserdampf, Kohlendioxid oder daraus hergestellten Gemischen.

Die Befeuerung von Dampfkesseln mit Kohle, insbesondere mit Brennstaub aus Kohle, ist weltweit die verbreitetste Methode der Energieumwandlung. Bezogen auf den theoretischen Mindestluftbedarf für die vollständige Verbrennung wird dabei der Brennstaub ein- oder mehrstufig mit Luftüberschuss in ein Verbrennungsgas mit hoher Temperatur, das möglichst wenig Unverbranntes enthält, umgewandelt. Dabei wird die Temperatur des Verbrennungsgases und der Brennstoffasche bzw. -schlacke vorrangig durch Regelung des Luftüberschusses eingestellt. Die chemische Energie der Brennstoffe wird möglichst vollständig in fühlbare und latente Wärme (Verdampfungswärme des Brennstoffwassers) umgewandelt, die zum größten Teil durch indirekte Wärmeübertragung an ein Arbeitsmittel, meist Wasser, übertragen wird, das in flüssiger Form für die Wärme- und Warmwassererzeugung und als Dampf vorzugsweise als Arbeitsmittel in Dampfturbinenanlagen zur Bereitstellung von technischer Arbeit, z. B. für die Stromerzeugung in Kraftwerken, eingesetzt wird.

Bedingt durch die Stoffwerte des Arbeitsmittels können aus solchen Kraftprozessen selbst bei großen, thermodynamisch optimierten Dampfkraftwerken für Braunkohle mit einer Brennstoffwärmeleistung von über 1000 MW nur weniger als 45% der zugeführten Brennstoffenergie in Form von Elektroenergie gewonnen werden. Bedingt ist das durch die mittlere Temperatur des Kraftprozesses. Insbesondere kleinere Anlagen, mit einer Brennstoffwärmeleistung von unter 50 MW und Dampfturbinen, erreichen oft nur elektrische Umwandlungswirkungsgrade von weniger als 30 %. Bei Verwendung von Biomasse oder Abfällen als Brennstoff in sogenannten ORC-Prozessen werden Wirkungsgrade von nur ca. 15 % erreicht. Praktisch hat das zur Folge, dass sich bei den kleinen Anlagen der dezentralen Energieversorgung Heizöl und Erdgas gegen Kohle durchgesetzt und Motorkraftwerke mit diesen Brennstoffen einen hohen Marktanteil erworben haben, mit denen elektrische Wirkungsgrade von mehr als 40 % auch bei kleinen Leistungen erreicht werden können.

Die aschearmen bzw. aschefreien Brennstoffe Heizöl und Erdgas ermöglichen auch die Kombination von Kreisprozessen mit unterschiedlichem mittleren Temperaturniveau. Deshalb wurde vielfach vorgeschlagen und realisiert, dem Dampfkraftprozess einen bei einer höheren mittleren Temperatur arbeitenden Gasturbinenprozess vorzuschalten. Durch diese Hintereinanderschaltung, wie bei Gas-Dampf-Kraftwerken, werden bei großen Kraftwerksleistungen der zentralen Energieversorgung elektrische Wirkungsgrade größer 60 % erreicht.

Die wirtschaftliche Wettbewerbsfähigkeit der dezentralen Motorkraftwerke mit elektrischen Wirkungsgraden von 40 % ergibt sich demgegenüber hauptsächlich aus der Vermeidung von Verlusten der Umformung des Stromes und der Fortleitung über verschiedene Spannungsebenen aus zentralen Großkraftwerken, also aus der dezentralen Anwendung.

Die thermodynamischen Vorteile der Anwendung von flüssigen und gasförmigen Brennstoffen gegenüber Kohle führten zur Entwicklung von speziellen Verfahren zur Erzeugung von Brenngasen aus festen Brennstoffen, wie Kohle und festen Biomassen, durch partielle Oxidation der Brennstoffe (Vergasung) mit Luft, Wasserdampf und Kohlendioxid oder daraus hergestellten Gemischen als Vergasungsmittel. Bei der Vergasung wird nur ein Teil der Brennstoffwärme in fühlbare Wärme des Brenngases umgewandelt. Der größte Teil der Brennstoffwärme bleibt als chemische Energie des Brenngases, also als dessen Brenn- bzw. der Heizwert, erhalten.

Die Technologien der Kohlevergasung lassen sich in 3 Kategorien einteilen, nämlich die Festbett-, Wirbelschicht- und Flugstromvergasung, die auch unter Druck betrieben werden können. Aus diesen Technologien ergeben sich Anforderungen an die Brennstoffe auch in Bezug auf Feuerstandsfestigkeit, Stückigkeit, Körnung und Aufmahlung.

Obwohl die Festbettvergasung die niedrigste Raum-Zeitausbeute erreicht, wird auch nach mehr als 150 Jahren noch versucht, sie für die Brenngaserzeugung aus Kohle und, neuerdings wieder verstärkt, stückiger Biomasse weiter zu entwickeln und zu ertüchtigen. Variiert wird vor allem die Strömung des Vergasungsmittels durch die Brennstoffschüttung. Dementsprechend wird in Gegen-, Gleich- und Querstromvergasung und Doppelfeuertechnologie unterschieden. Bei allen diesen Varianten bilden sich Schwelzonen in der Brennstoffschüttung aus, in deren Folge das heiße Brenngas neben Asche auch mit Teer belastet ist, was vor der Verwendung des Gases in Verbrennungsmotoren und Kompressoren Maßnahmen zur Gasreinigung erfordert, die wiederum die Zeitverfügbarkeit und damit die Wirtschaftlichkeit negativ beeinflussen.

Aus diesen Gründen können Motorkraftwerke mit vorgeschalteten Festbettvergasungsanlagen für Kohle und Biomasse auch derzeit keinen signifikanten Beitrag zur dezentralen und regenerativen Stromversorgung leisten.

Die Entwicklung der Ammoniak-, Methanol- und Fischer-Tropsch-Synthesen erforderte die Bereitstellung von Synthesegas mit großer Leistung. Das führte vor 80 Jahren in Deutschland zur Entwicklung der Wirbelschichtvergasung nach Winkler. Auch hier zeigte sich, dass beim direkten Einsatz von Kohle, Torf und Biomasse teerhaltige Gase entstehen. Zurückzuführen ist das auf die Entgasung im Brennstoffkorn während der Brennstoffaufwärmung.

Obwohl bekannt ist, dass durch Zugabe von Wasserdampf zur Vergasungsluft oder dem Sauerstoff der endotherme Anteil am Brennstoffumsatz und damit die Brennstofftemperatur und das Sinterverhalten der Brennstoffasche beeinflusst werden können, darf bei der Wirbelschichtvergasung die Prozesstemperatur wegen der ungenügenden Homogenität des Brennstoff Vergasungsmittel-Gemisches selbst bei hoher Ascheerweichungstemperatur im praktischen Betrieb 850 °C dauerhaft nicht überschreiten, da wegen nicht möglicher perfekter homogener Vermischung des Brennstoffes mit dem Vergasungsmittel eine lokale Erweichung der Brennstoffasche, insbesondere in der Anströmzone, auftreten kann. Die Herstellung von teerfreiem Gas in der Wirbelschicht gelang nur, indem der Prozessschritt Entgasung vom Prozessschritt Vergasung abgekoppelt wurde und die Brennstoffe vor ihrem Einsatz, z. B. durch Schwelung, entgast wurden.

Darüber hinaus erreichte die Wirbelschichtvergasung keinen vollständigen Kohlenstoffumsatz, und der externe Hilfsenergiebedarf für die Fluidisierung der Brennstoffe ist hoch.

Beides muss als Ursache dafür angesehen werden, dass auch die Wirbelschichtvergasungsverfahren, gleichgültig, ob mit stationärem oder zirkulierendem Brennstoffbett, sich für die Erzeugung von Brenngas für die Stromerzeugung nicht durchsetzen konnten.

Die Schlussfolgerung daraus war die Entwicklung der Fugstromvergasung von fein aufgemahlenem Kohlebrennstaub in einer Flammenreaktion, abgeleitet aus der Verbrennung von Brennstaub oberhalb der Ascheschmelztemperatur mit Flüssigschlackeabzug. Gegenüber der Verbrennung ist dies praktisch eine Fahrweise mit Sauerstoffunterschuss, bei der Brennstaub und Vergasungsmittel weitgehend homogen vermischt werden.

Wegen der Gefahr der Verschlackung der dafür verwendeten Vorrichtungen arbeiten die bekannten Flugstromvergasungsverfahren, wie Schmelzkammerfeuerungen, grundsätzlich oberhalb der Schmelztemperatur der Brennstoffasche. Die dabei entstehende flüssige Schlacke wird durch Quenchen mit Wasser oder kaltem Kreislaufgas in eluierfestes Schlackegranulat umgewandelt. Das Ziel, die Produktion von teerfreiem Gas, wird mit der Flugstromvergasung somit erreicht.

Die hohen Prozesstemperaturen von 1200 bis 1700 °C bei der Flugstromvergasung haben zur Folge, dass bis 30 % des Brennwertes der festen Brennstoffe in fühlbare Wärme der Brenn- oder Synthesegase umgewandelt werden, so dass manchmal nur 70 % der Brennstoffwärme (Kaltgaswirkungsgrad) für die Verstromung in den nachgeschalteten Gasturbinen und Verbrennungsmotoren zur Verfügung stehen. Das ist der entscheidende Nachteil des Standes der Technik der Flugstromvergasung.

Bekannt sind auch Verfahren, wie das Thermo-Select-Verfahren, das Schwel-Brenn-Verfahren von Siemens-KWU und das Nöll-Konversions-Verfahren, die der Verbrennung oder Vergasung eine Pyrolyse vorschalten und aus solchen Brennstoffen wie organische Abfälle und Biomasse neben Schwelgas auch Kohlenstoff produzieren, der vor seiner weiteren Umwandlung zu Brennstaub aufgemahlen wird.

Alle diese Erfahrungen sind in das Carbo-V-Verfahren der CHOREN Industries GmbH (www.choren.com) eingeflossen, das speziell für die Vergasung von Abfall und Biomasse entwickelt wurde. Dieses Verfahren arbeitet dreistufig. In der ersten Stufe, der Niedertemperaturvergasung, wird getrocknete Biomasse durch partielle Oxidation zwischen 300 und 800 °C in Schwelgas und Koks zerlegt. In der zweiten Stufe wird das teerhaltige Schwelgas bei Temperaturen oberhalb der Ascheschmelztemperatur und Restkoks aus der dritten Stufe weiter zu Vergasungsrohgas, das dabei Temperaturen von 1200 bis 1600 °C erreicht, oxidiert. In der dritten Stufe wird in dieses heiße, wasserdampf- und kohlendioxidhaltige Vergasungsrohgas Koks aus der ersten Stufe eingeblasen, der dort chemisch endotherm reagiert und so das teerfreie Gas bis auf 800 °C abkühlt. Das Vergasungsrohgas wird hier, auch unter Überführung der flüssigen Schlacke in festes Granulat, nicht durch Wassereindüsung oder Kaltgasrückführung physikalisch, sondern durch endotherme chemische Reaktionen gequencht.

Die für alle bekannten Verfahren der Flugstromvergasung durch Quenchen übliche Umwandlung von flüssiger Schlacke in eluierfestes Granulat hat zur Folge, dass bei der Vergasung von Biomasse in der Brennstoffasche enthaltene Bodennährstoffe, wie Phosphor, der weiteren Nutzung entzogen werden.

Das Ziel der Erfindung besteht in der Umwandlung von Brennstaub aus Kohle oder kohleähnlichen Brennstoffen aus Biomasse und organischen Abfällen in für Verbrennungsmotoren, Gasturbinen und Kompressoren oder für chemische Synthesen geeignete teerfreie Brenn- oder Syntheserohgase bei hohem Kohlenstoffumsatz und chemischem Umwandlungswirkungsgrad, niedrigem Aufwand an Hilfsenergie sowie Erhalt der in der Brennstoffasche befindlichen Bodennährstoffe.

Damit besteht die technische Aufgabe der Erfindung darin, solche Brennstäube bei hohem Kohlenstoffumsatz bei (möglichst) niedriger Temperatur in ein praktisch teerfreies Brenn- oder Synthesegas umzuwandeln, das beim Stand der Technik der Flugstromvergasung überwiegende Aufschmelzen der Brennstoffasche und deren Umwandlung in ein eluierfestes Granulat zu vermeiden, die Nutzung von Nährstoffen der Brennstoffasche zu ermöglichen und den Anteil der fühlbaren Wärme im Zuge der Vergasung zu minimieren.

Die Erfindung betrifft daher ein Verfahren zur Umwandlung von Brennstaub aus Kohle und durch hydrothermale Karbonisierung aus Biomasse oder organischen Abfällen hergestellten Brennstoffen in Brenn- oder Syntheserohgase, durch Vergasung in einer Flammreaktion unterhalb der Erweichungstemperatur der Brennstoffasche, was sichergestellt wird durch die Zuführung des Vergasungsmittels und die Regelung des Anteils der endothermen Reaktionen des Brennstaubes mit Wasserdampf und/oder Kohlendioxid sowie Aufteilung des Vergasungsmittelgemisches in mindestens zwei Teilströme, wobei mindestens ein Teilstrom für den pneumatischen Transport des Brennstaubes und die anderen Teilströme zum Transport des Wasserdampfes und/oder Kohlendioxides in die Brennkammer verwendet werden. Die Erfindung betrifft auch Vorrichtungen zur Durchführung des erfindungsgemäßen Verfahrens.

Die technische Aufgabe wird gelöst, indem die verfahrenstechnischen Voraussetzungen für eine annähernd vollständige partielle Oxidation der bei der Brennstofferhitzung entstehenden Entgasungsprodukte und des festen Kohlenstoffes geschaffen werden.

Erfindungsgemäß wird das erreicht, indem mindestens ca. 25 % des für die vollständige Verbrennung des Brennstaubes erforderlichen molekularen Sauerstoffs in Form von Luft oder technischem Sauerstoff in mindestens zwei Teilströmen als Vergasungsmittel unter Zumischung von Wasserdampf und/oder Kohlendioxid der chemischen Reaktion mit dem Brennstaub zu Vergasungsrohgas zugeführt werden, wobei mindestens ein Teilstrom mit Brennstaub beladen wird und der pneumatischen Förderung des Brennstaubes dient, bevor die Teilströme zu einem gleichmäßig beladenen heterogenen Gemisch in einer Brennkammer vermischt und oberhalb ihrer Zündtemperatur im Temperaturbereich, vorzugsweise zwischen ca. 750 °C und ca. 1100 °C, aber nicht über der Erweichungstemperatur der Brennstoffasche, zur chemischen Reaktion gebracht werden, und die Reaktionstemperatur durch die Zugabe von Vergasungsmittel und dessen Beladung mit Wasserdampf und/oder Kohlendioxid geregelt und unterhalb der Ascheerweichung eingestellt wird.

Es ist weiterhin erfindungsgemäß, dass der den Brennstaub transportierende Teil des Vergasungsmittels vor der Zusammenführung mit den anderen Teilströmen des Vergasungsmittels vor der Brennkammer durch partielle Oxidation über die Zündtemperatur des Brennstaubes erhitzt und der Brennstaub einer Flashpyrolyse unterzogen wird.

Vorteilhaft wird die Brennstoffasche zu mindestens ca. 60%, bevorzugt zu mindestens ca. 70% zusammen mit dem erzeugten Brenn- oder Synthesegas aus der Brennkammer abgeführt und mit diesem zusammen bevorzugt auf unter ca. 600°C, besonders bevorzugt auf unter ca. 200°C abgekühlt und erst danach von diesem abgetrennt.

Gemäß einer weiteren vorteilhaften Ausführungsform wird die Erweichungstemperatur der Brennstoffasche durch die Vermischung des Brennstaubes mit geeigneten Zuschlagsstoffen, bevorzugt mit Kalk, vor dessen Eintritt in die Brennkammer angehoben. Weiterhin bevorzugt, wird die Erweichungstemperatur der Brennstoffasche von Brennstaub, der aus Biomasse über hydrothermale Karbonisierung hergestellt wurde, durch das Auswaschen von Kalium in der hydrothermalen Karbonisierung angehoben.

Für die Realisierung des Verfahrens wird erfindungsgemäß eine Vorrichtung vorgeschlagen, bei der die Brennkammer von einem Doppelmantel umschlossen wird, der von mindestens einem Vergasungsmittelteilstrom durchströmt wird oder mit Kesselspeisewasser gefüllt ist und mit der Brennkammer einen Kanal bildet, über den im Gegenstrom zur Gasströmung in der Brennkammer das Vergasungsrohgas aus der Vorrichtung abgeführt wird.

Eine weitere erfindungsgemäße Vorrichtung ist gekennzeichnet durch eine gasdichte Feuerung eines Dampfkessels des Standes der Technik, z.B. ein Flammrohr, die in eine erfindungsgemäße Brennkammer, mit oder ohne Feuerfestzustellung, integriert ist, wobei das in der Brennkammer entstehende heiße Vergasungsrohgas umgelenkt wird und die Außenflächen der Brennkammer umspült, bevor es dem Feuerraum oder Heizzügen des Dampfkessels zugeführt und dort gekühlt wird.

Der wirtschaftliche Vorteil der Erfindung liegt in der Vermeidung des Aufschmelzens der Brennstoffasche bei der Umwandlung von Brennstaub in Brenn- und Synthesegas und damit im Erhalt der Bodennährstoffe bei der Verwendung von aus Biomasse hergestellter Kohle sowie der Anhebung des Kaltgaswirkungsgrades um bis zu 10 %-Punkte gegenüber dem Stand der Brennstaubvergasung, aber auch in der verfahrenstechnischen und apparativen Vereinfachung des Standes der Technik durch Vermeidung der mehrstufigen Umwandlung, insbesondere der Prozessstufe Quenchen.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Die Erfindung soll anhand des folgenden Beispiels erläutert werden, ohne jedoch auf die speziell beschriebenen Ausführungsformen beschränkt zu sein.

### Ausführungsbeispiel

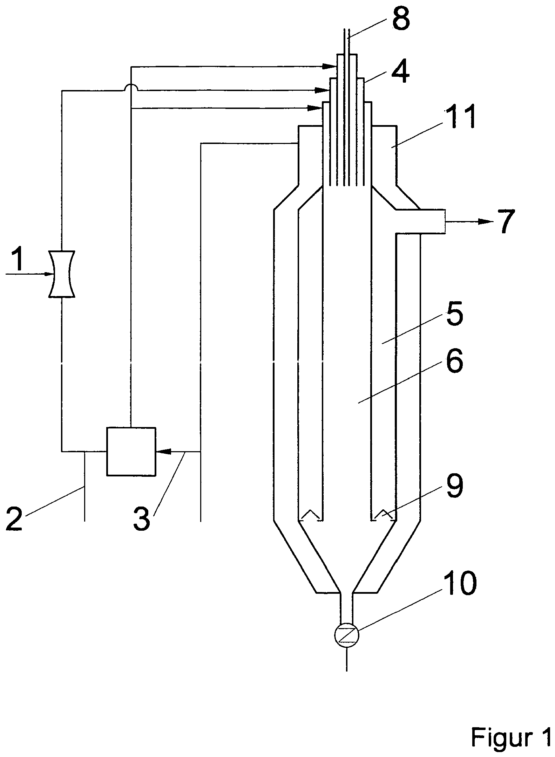

Die Erfindung wird mit Hilfe von Figur 1 und einer rechnerischen Abschätzung mit nachfolgendem Ausführungsbeispiel beschrieben.

Für die Umwandlung zu Brenngas soll Brennstaub mit folgender Zusammensetzung in kg/kg zur Verfügung stehen:
Kohlenstoff: 0,545
Wasserstoff: 0, 062
Sauerstoff: 0,260
Stickstoff: 0,003
Asche: 0,050
Wasser: 0,080
Heizwert: 6,2 kWh/kg
Ascheerweichungstemperatur in reduzierender Atmosphäre: 1050 °C.
Mindestluftbedarf für die vollständige Verbrennung: 5,63 m³/kg.

Dieser Brennstaub soll bei einer Reaktionstemperatur von 900 °C durch Vergasung (partielle Oxidation) mit einem Luft-Wasserdampf-Gemisch ohne Verschlackung der Asche in Brenngas umgewandelt werden, das mit 600 °C über die Gasableitung 7 das erfindungsgemäße Verfahren verlässt und einer Abwärmenutzung zugeführt wird.

Zu diesem Zwecke wird ein Teilstrom der für die Vergasung erforderlichen Luft 2 homogen mit Brennstaub 1 vermischt und pneumatisch zum Mehrkanalbrenner 4 transportiert. Der andere Teil der Vergasungsluft 2 wird mit Wasserdampf 3 beladen, auf 500 °C rekuperativ vorgewärmt und danach anderen Kanälen des Mehrkanalbrenners 4 zugeführt. Auf diese Art wird über den Mehrkanalbrenner 4 pro kg Brennstaub mit 2,35 kg Luft und 0,180 kg Wasserdampf in der 900 °C heißen Brennkammer 6 zur Reaktion gebracht. Die Wärmeverluste der Brennkammer sollen 700 kJ/kg Brennstaub betragen.

Es entsteht ein Brenngas mit folgender Zusammensetzung in kg/kg:
Kohlenmonoxid: 0,320
Kohlendioxid: 0,090
Wasserstoff: 0,015
Wasserdampf: 0,040
Methan: 0,001
Stickstoff. 0,534
Heizwert: 1,425 kWh/kg Brenngas
Gasausbeute: 3,36 kg/kg Brennstaub
Kaltgaswirkungsgrad: 0, 77

### Bezugszeichenliste

- 1: Brennstaubzuführung
- 2: Vergasungsmittel (Luft)
- 3: Wasserdampf/Zumischung
- 4: Mehrkanalbrenner
- 5: Heißgaskanal
- 6: Brennkammer
- 7: Gasableitung
- 8: Zündbrenner
- 9: Prallabscheider
- 10: Ascheaustragung
- 11: Wassermantel

## Patentansprüche

1. Verfahren zur Erzeugung von Brenn- und Syntheserohgas aus Brennstaub, der aus Kohle oder Brennstoffen gewonnen wurde, die aus Biomasse oder organischen Abfällen hergestellt wurden, durch partielle Oxidation mit Luft, technischem Sauerstoff, Wasserdampf oder Kohlendioxid oder Gemischen davon, in einer Flammenreaktion, wobei mindestens 25 % des für die vollständige Verbrennung des Brennstaubes erforderlichen molekularem Sauerstoffs als Vergasungsmittel in wenigstens zwei Teilströmen unter Zumischung von Wasserdampf und/oder Kohlendioxid der chemischen Reaktion mit Brennstaub zu Vergasungsrohgas zu geführt werden,
**dadurch gekennzeichnet, dass**
mindestens ein Teilstrom mit Brennstaub beladen wird, bevor die Teilströme zu einem gleichmäßig beladenen heterogenen Gemisch in einer Brennkammer vermischt und über eine Flammenreaktion im Temperaturbereich zwischen 750 °C und 1100°C, aber nicht über der Erweichungstemperatur der Brennstoffasche, zur chemischen Reaktion gebracht werden und die Reaktionstemperatur durch die Zugabe des Vergasungsmittels und dessen Beladung mit Wasserdampf und/oder Kohlendioxid geregelt und unterhalb der Ascheerweichung eingestellt wird.

2. Verfahren nach Anspruch 1, **dadurch gekennzeichnet, dass** der den Brennstaub transportierende Teil des Vergasungsmittels vor der Zusammenführung mit den anderen Teilströmen des Vergasungsmittels vor der Brennkammer durch partielle Oxidation über die Zündtemperatur des Brennstaubes erhitzt und der Brennstaub einer Flashpyrolyse unterzogen wird.

3. Verfahren nach Anspruch 1 oder 2, **dadurch gekennzeichnet, dass** die Brennstoffasche zu mindestens 60% zusammen mit dem erzeugten Brenn- oder Synthesegas aus der Brennkammer abgeführt wird und mit diesem zusammen abgekühlt wird.

4. Verfahren nach einem oder mehreren der Ansprüche 1 - 3, **dadurch gekennzeichnet, dass** die Erweichungstemperatur der Brennstoffasche durch die Vermischung des Brennstaubes mit geeigneten Zuschlagsstoffen vor dessen Eintritt in die Brennkammer angehoben wird.

5. Verfahren nach einem oder mehreren der Ansprüche 1 - 4, **dadurch gekennzeichnet, dass** die Erweichungstemperatur der Brennstoffasche von Brennstaub, der aus Biomasse über hydrothermale Karbonisierung hergestellt wurde, durch das Auswaschen von Kalium in der hydrothermalen Karbonisierung angehoben wird.

6. Verfahren nach einem oder mehreren der Ansprüche 1 - 5, **dadurch gekennzeichnet, dass** der Brennstaub aus Kohle oder Brennstoffen gewonnen wurde, die über hydrothermale Karbonisierung aus Biomasse oder organischen Abfällen hergestellt wurden.

## Claims

1. A process for producing fuel gas and synthesis raw gas from pulverized fuel obtained from coal or fuels which were produced from biomass or organic wastes, by partial oxidation with air, technical oxygen, steam or carbon dioxide or mixtures thereof, in a flame reaction, wherein at least 25% of the molecular oxygen required for the complete combustion of the pulverized fuel are supplied as gasification medium in at least two partial streams with admixture of steam and/or carbon dioxide to the chemical reaction with pulverized fuel to obtain gasification raw gas,
**characterized in that**
at least one partial stream is loaded with pulverized fuel, before the partial streams are mixed in a combustion chamber to obtain a uniformly loaded heterogeneous mixture, and via a flame reaction in a temperature range between 750 °C and 1100 °C, but not above the softening temperature of the fuel ash, are brought to a chemical reaction, and the reaction temperature is controlled by adding the gasification medium and by loading the same with steam and/or carbon dioxide and is set below the softening of ash.

2. The process according to claim 1, **characterized in that** before being joined with the other partial streams of the gasification medium in front of the combustion chamber, the part of the gasification medium transporting the pulverized fuel is heated above the ignition temperature of the pulverized fuel by partial oxidation, and the pulverized fuel is subjected to a flash pyrolysis.

3. The process according to claim 1 or 2, **characterized in that** the fuel ash together with the fuel gas or synthesis gas produced is discharged from the combustion chamber for at least 60% and is cooled together with the same.

4. The process according to one or more of claims 1 - 3, **characterized in that** the softening temperature of the fuel ash is raised by mixing the pulverized fuel with suitable aggregates before its entry into the combustion chamber.

5. The process according to one or more of claims 1 - 4, **characterized in that** the softening temperature of the fuel ash of pulverized fuel, which was produced from biomass via hydrothermal carbonization, is raised by washing out potassium in the hydrothermal carbonization.

6. The process according to one or more of claims 1 - 5, **characterized in that** the pulverized fuel was obtained from coal or fuels which were produced from biomass or organic wastes via hydrothermal carbonization.

## Revendications

1. Procédé de production d'un gaz brut de combustion et de synthèse à partir d'une poussière de combustion qui a été extraite du charbon ou de combustibles, fabriqués à partir de biomasse ou de déchets organiques, par oxydation partielle avec de l'air, de l'oxygène technique, de la vapeur d'eau ou du dioxyde de carbone ou des mélanges de ceux-ci dans une réaction à la flamme, au moins 25 % de l'oxygène moléculaire nécessaire à la combustion complète de la poussière de combustion étant amenés en tant qu'agent de gazéification à la réaction chimique avec la poussière de combustion en gaz brut de gazéification en au moins deux courants partiels sous addition de vapeur d'eau et/ou de dioxyde de carbone,
**caractérisé en ce que**
au moins un courant partiel est chargé de poussière de combustion avant que les courants partiels ne se mélangent dans une chambre de combustion pour donner un mélange hétérogène chargé uniformément et soient mis à réagir chimiquement par le biais d'une réaction à la flamme dans une plage de températures comprises entre 750 °C et 1100 °C, mais pas au-dessus de la température de ramollissement des cendres du combustible, et que la température de réaction ne soit réglée par l'addition de l'agent de gazéification et son chargement avec de la vapeur d'eau et/ou du dioxyde de carbone et ajustée en dessous du point de ramollissement des cendres.

2. Procédé selon la revendication 1, **caractérisé en ce que** la partie de l'agent de gazéification transportant la poussière de combustion est chauffée au-dessus de la température d'inflammation de la poussière de combustion par oxydation partielle avant la chambre de combustion avant le rassemblement avec les autres courants partiels de l'agent de gazéification et la poussière de combustion est soumise à une pyrolyse flash.

3. Procédé selon la revendication 1 ou 2, **caractérisé en ce que** les cendres de combustible sont évacuées de la chambre de combustion à au moins 60 % conjointement avec le gaz de combustion ou de synthèse produit et sont refroidies conjointement avec celui-ci.

4. Procédé selon l'une ou plusieurs des revendications 1 à 3, **caractérisé en ce que** la température de ramollissement des cendres de combustible est rehaussée par mélange de la poussière de combustion avec des additifs appropriés avant leur entrée dans la chambre de combustion.

5. Procédé selon l'une ou plusieurs des revendications 1 à 4, **caractérisé en ce que** la température de ramollissement des cendres de combustible de la poussière de combustion qui a été fabriquée à partir de biomasse par carbonisation hydrothermale est rehaussée par le lessivage du potassium au cours de la carbonisation hydrothermale.

6. Procédé selon l'une ou plusieurs des revendications 1 à 5, **caractérisé en ce que** la poussière de combustion a été extraite du charbon ou de combustibles qui ont été fabriqués à partir de biomasse ou de déchets organiques par carbonisation hydrothermale.
